# EUROPEAN PATENT APPLICATION

(11) **EP 2 919 531 A1**
(43) Date of publication of application: **16.09.2015**
(21) Application number: 14158682.6
(22) Date of filing: 10.03.2014
(51) Int. Cl.: H04W 52/02

(54) **Method and system for determining where and when in a cellular mobile network power consumption savings can be achieved without impacting quality of service**

(71) Applicant: Aspire Technology Limited, Dublin 18 (IE)
(72) Inventor: McGann, Tom, Dublin, D18 (IE); MacNamara, Brian, Dublin, D18 (IE)
(74) Representative: Lucey, Michael

(57) **Abstract**

A method and a system for determining where and when in a cellular mobile network power consumption savings can be achieved without impacting quality of service. A first candidate cell list is generated, based on collecting Performance Management (PM) and Configuration Management (CM) data of each cell of the network, measuring short time cell load and describing network traffic in a traffic profile as a function of time per cell. A second candidate cell list is generated, based on comparing, configuration, operational and performance criteria of each cell in the first list against respective thresholds. A power save schedule is adapted for each cell of the second candidate cell list, based on network and cell operational data. Each cell of the second list is then subjected to a power save execution mechanism according to the adapted schedule. The continuously monitored PM KPI data in the area of each cell subjected to the power save execution mechanism, and the performance of the associated power save execution activity itself, are submitted as input when generating the first and second candidate cell lists.

## Description

### Field of the Invention

The invention relates to a method for determining where and when in a cellular mobile network power consumption savings can be achieved without impacting quality of service.

### Background of the Invention

Many solutions have been proposed for achieving power savings at base stations of mobile telecommunications networks, primarily based on low traffic load and/or unused capacity. The main driving forces are reducing operating costs, increasing efficiency and reducing related carbon emissions. The core underlying concept of most such solutions is to make energy usage more proportional to traffic load, and the main challenge faced by any power-saving technique or implementation is to maintain reliable service coverage and Quality of Service (QoS) in the area concerned, whilst simultaneously reducing the energy consumption.

Power-saving methods deployed today, for instance as discussed in *"*Energy Savings in Mobile Networks Based on Adaptation to Traffic Statistics", Bell Labs Technical Journal 15(2), 77-94 (2010), focus mainly on areas such as power amplifier efficiency, minimizing feeder losses and avoiding air conditioning in the cabinet (e.g. by employing fresh air cooling). Another relatively simple power-saving gain made possible today is to restrict the transmission radius of wireless cells, for instance as discussed in the online article http://www.lightreading.com/energy-efficiency/wireless-networks-look-ripe-for-energy-savings, because smaller cells require less watt power overall, even if more cells would be required. Sharing of base station infrastructure between operators can also greatly improve utilization rates. Examples of power save applications are disclosed in patent publication numbers WO201207931 and US20120244869.

Future techniques under current investigation and development involve dynamically adapting the networks to the actual traffic load and service demands, with such techniques as (i) automatically switching off unnecessary cells, which requires adapting and compensating mechanisms in neighbouring cells for optimizing the coverage and capacity (e.g. automatic antenna tilting, power optimization or updating the list of neighbour cells); (ii) modifying the radio topology of the network, e.g. with reorganizing the frequency re-use scheme for low load situations, or optimal network topologies with less mutual interference; and (iii) reducing the radiated power with methods such as dynamic bandwidth shrinking (in the frequency domain) and cell micro-sleep (in the time domain).

Such dynamic adaptation concepts require coordination between neighbouring base stations and thus require deployment over a longer-term time scale. Further, these concepts demand a fundamental paradigm shift for network operation, administration and maintenance (OAM) towards dynamic and automatic network management with self-organizing network (SON) functionality, self-learning, and intelligent decision making.

Most power-saving solutions discussed and under investigation in the field of Radio Access Network (RAN) detail future power-saving proposals, primarily with the assistance of SON feature and decision-making support, and focus on potential savings and benefits. The problem is that insufficient details are provided about how to effectively or optimally choose suitable power-saving candidate cells, and which specific criteria to consider, for overcoming many of the current limitations of existing or known RAN Power Save execution mechanisms, for the existing installed base. The information that is typically missing or not considered includes which input criteria should be used to decide both candidate sites/sectors/cells to choose for power save and suitable times at which to schedule power save; how to measure these different criteria (e.g. traffic load, capacity utilisation, performance or other indicators) specifically; how to automate candidate cell and schedule selection; and how to verify the accuracy of the candidate cell selection.

The present disclosure is unconcerned with any such future power-saving techniques, such as those which will require SON support, i.e. it does not explicitly consider any neighbour cell power variation or electrical tilt changes, or any bandwidth change depending on load requirements. On the contrary, the present disclosure is concerned with enhancing an existing and relatively simple base station power-saving technique, which locks or disables RF output power of cells, sectors, carriers or sites when certain low-traffic criteria are met, and the basic premise of which is that cells or sectors that are specifically deployed to take over excess network load during peak traffic load, or just simply any unused capacity cells, can be turned down completely in low traffic conditions, e.g. during the night.

A problem with this technique is that it requires important network management and manual interaction of trained personnel to prevent coverage and/or capacity holes in the network. It also requires intensive manual pre-analysis work for determining a list of suitable candidate cells for power-saving implementation, and this cell list may then only be valid for a short time. Specifically, the decision criteria for how to optimally choose which cells are suitable candidates for power-saving, and at what specific times, is not well-described anywhere. Today this activity needs to be performed manually, is inherently complex and slow, and fraught with inaccuracy as many variables are involved. Accordingly, this preliminary aspect of the power-saving technique is far from cost-effective, particularly in increasingly ever-changing radio network environments, and it is expected to become a non-trivial problem for optimal network operation as ever more self-organising networks are implemented.

With a manual approach, the task is simply too complex, slow and repetitive to be useful or effective for operator deployment: there are too many input criteria to consider manually, including how to measure and which specific criteria (which may differ per site and per person); how to evaluate traffic profile in view of relevant periods which traffic profile evaluation period may differ; how to do so without human error or introducing subjective criteria. Consequently, the "manual" candidate list determined is not the optimal list selection i.e. there is no real-time or continuous feedback of previous power save execution and KPI performance, which means no effective optimisation of the cell list selection on a continuous basis. Any feedback to adjust the decision criteria or rules and candidate cell preferences is manual, subjectively determined, delayed and thus not optimal.

The following identifies and discusses practical limitations inhibiting the selection of candidate cells for a power-saving list, which effectively prevent a more widespread deployment of the simple power-saving technique discussed above.

Current Radio Access Network Power Save execution mechanisms are intended to help mobile network operators save electrical energy by simply locking cells (or base station sectors/sites) during periods with expected low traffic. Power save execution functionality is typically implemented as follows across different network vendors: power save is intended to be applied on individual cells (or carriers) in areas with low traffic during specific time periods; the candidate cells and associated time periods for power management are manually selected by an operator; the selected cells are then included in one or more operator-defined profiles. These profiles can be created and updated by either using a Graphical User Interface (GUI) or a Command Line Interface (CLI) in the network management system or Operations Support System (OSS). Each profile containing a list of candidate cells is scheduled for specific lock and un-lock time(s). The locking of resources is executed at the pre-defined schedule times with minimal traffic impact intended by soft-locking the cells, i.e. connected User Equipment (UE) will typically hand over to another cell and idle mode UEs will camp at another network location. Limitations to the implementation of such power save execution mechanisms solutions are now discussed.

Power save candidate cell list determination requires intensive manual pre-analysis work. This technique is inefficient and time-consuming, as it requires significant man-hours for generating a "one-time-use" candidate list. The list is single-use because suitable candidate cells may vary frequently (e.g. daily) due to the ever-changing radio environment, network traffic patterns, and network configurations (or, in the case of a SON network, frequent automatic reconfigurations). No auditing service is offered to automatically propose cell candidates and power save schedules based on historical performance or other input data. No clear criteria or guidelines exist for the operator to follow, to guide their choice of suitable power save candidate cells, regardless of the optimal or automatic nature of that choice. Static power save execution mechanisms remain dependent on an operator inputting specific start/stop times for feature execution. The power saving benefits achieved are demonstrably sub-optimal with such a fixed-time interval approach, as each candidate cell optimal power save time may differ.

Further to the problems pervading the selection of candidate cells discussed above, the subsequent execution of the power-saving is likewise fraught with issues. There is no automatic power save execution reactivation if the feature is previously deactivated in candidate cells, for instance due to neighbour short-term traffic congestion. No data is collected and presented to indicate Key Performance Indicator (KPI) performance during execution of the power save mechanism, for example an ability to highlight cells which should not be power-locked due to resultant congestion in neighbour cells, or other operational reasons.

Other general limitations of this base station power-saving technique include a lack of adaptability via alternative or dynamic coverage, for instance by increasing power or modifying the tilt of an antenna at or relative to other sites for accommodating missing coverage; the focus upon a specific RAN technology implementation (GSM, UMTS, LTE, WIFI) which excludes multi-technology multi-vendor networks; potential problems at the time of unlocking cells, due to excess initial power output in coverage areas; and significant vendor feature license costs.

Automation of this candidate cell determination process is a basic requirement for future power save implementations, since power save execution will need to execute continuously and be adaptive and self-learning in real-time primarily based on traffic load and network performance.

### Summary of the Invention

The present invention provides a method and system, as set out in the appended claims, for addressing the above limitations and disadvantages with a flexible rule logic, which automatically determines a list of RAN power save candidate cells with corresponding scheduling criteria, on a continuous basis.

Accordingly, in one aspect of the invention, there is provided a method for determining where and when in a cellular mobile network power consumption savings can be achieved without impacting quality of service, comprising the steps of :
collecting Performance Management (PM) and Configuration Management (CM) data of each cell of the network
describing network traffic in a traffic profile as a function of time per cell applying a rule based intelligent algorithm to the cell traffic profiles to generate an initial list of candidate cells and a schedule for each candidate cell where it is deemed suitable for power saving
applying a set of filtersto the initial list of candidate cells to exclude cells based on specific configuration, operational and performance criteria to generate a refined list of candidate cells and a schedule for each candidate cell
   - generating a recommended powersave profile for use in a powersave execution mechanism, where the profile comprises of one or more schedules (i.e. continuous block of time), with each schedule containing one or more cells, collecting Performance Management data and evaluating the impact of the powersave execution mechanism on the quality of service in the area of each cell subjected to the power save execution and using the impact to quality of service as input into the generation of the initial and refined lists of candidate cells
   - performing the above steps in an automated and continuous manner thereby implementing a continuous closed loop system based on machine learning

In one aspect there is provided the steps of generating the initial and refined lists of candidate cells for the purposes of reducing power consumption in a cellular network comprising a plurality of cells, further comprises
- generating a first candidate cell list, based on collecting Performance Management (PM) and Configuration Management (CM) data of each cell of the network, measuring short time cell load (and other measurement indicators) and describing network traffic in a traffic profile as a function of time per cell, then applying the cell load, traffic profile and other performance measurement indicators (some dependent on configuration) to a rule based intelligent algorithm for candidate cell and schedule selection
- generating a second candidate cell list, based on comparing Key Performance Indicators (KPI), configuration and operational parameters of each cell of the first candidate cell list against respective thresholds.

In one aspect the Performance Management (PM) and Configuration Management (CM) data is at least one selected from the group comprising current site/cell traffic level or load, predicted site/cell traffic level, current and predicted site/cell traffic level in corresponding neighbour, overlay and inter-RAT cell(s), site/cell power save activity performance, estimated/measured power savings, potential Key Performance Indicator (KPI) impact of power save on neighbour cells, overlay cells, and other RATs; overall site performance status prior to and during power save, aggregated historical PM data of second list candidate cell over a predetermined evaluation period, and power save schedule over a predetermined level of chronological granularity.

In one aspect the Performance Management (PM) and Configuration Management (CM) data is further selected from the group comprising network sectors that have additional Intra-RAT or overlay carriers and network sectors that have Inter-RAT coverage, terminal measurements input, terminal capability support considerations, other site or sector level specific measurements.

In one aspect the performance measurement indicators and operational parameters are at least one selected from the group comprising alternative coverage options such as neighbour, overlay or other RAT; carrier strategy data for power save; site/cell configuration data (e.g. preferred powersave configurations); suitable alternative capacity options such as neighbour, overlay, or other RAT; potential KPI impact of power save and subsequent power resume in the cell and neighbouring and/or overlaying cells, or other RATs; estimated/measured power savings of power save execution; whether the cell is included in an operator-defined black list or white list; whether emergency call support is a requirement and not alternatively supported by other coverage capability; whether "always-on" or "not allowed" periods defined.

In one aspect the method comprises the steps of generating a recommended powersave profile further comprises
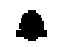 adapting a power save schedule for each cell of the second candidate cell list, based on network and/or cell operational data,
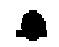 grouping cells of the second candidate cell list into optimal batches or time schedules according to the adapted power save schedule, for the purpose of using in a powersave execution mechanism according to said recommended powersave profile

In one aspect the network and/or cell operational data is at least one selected from the group comprising specific locations at which coverage should be maintained for specific time periods; signalling load at LA/RA/TA boundaries, operator-defined always-on time periods, CV auto backups schedule, system upgrades schedule, network reconfiguration events, scheduled migrations from e.g. Asynchronous Transfer Mode (ATM) to Internet Protocol (IP) sites, site-specific investigation schedule, Neighbouring Cell Support (NCS) or other OSS feature schedule.

In one aspect the step of adapting a power save schedule for a cell further comprises excluding the cell from the second list when the operational data for the cell is incompatible with the power save execution mechanism.

In one aspect the method comprises the further steps of:
- determining a network traffic level or load and a cell KPI performance status of a cell after adapting its power save schedule and before subjecting the cell to the power save execution mechanism ; and
- removing the cell from its recommended powersave profile(s) prior to power save execution if the network traffic level and/or the KPI performance status fails to meet a predetermined minimum threshold.

In one aspect the steps of evaluating the impact of the powersave execution mechanism on the quality of service, further comprises
- continuously monitoring Performance Management (PM) data in the area of each cell subjected to the power save execution mechanism, as well as the associated power save execution/activity performance; and
- submitting same PM KPI performance impact during powersave and power save activity performance feedback as input to the steps of generating the first and second candidate cell lists.
- performing the above steps in an automated and continuous manner in order to implement a continuous closed loop system for machine learning capability (i.e. "self-learning" or "intelligent" rule based algorithm)

In another aspect there is provided a system for determining where and when in a cellular mobile network power consumption savings can be achieved without impacting quality of service, comprising :
- a plurality of cells defining the cellular mobile network ;
- a power save listing module for generating
   - a first candidate cell list, based on collecting Performance Management (PM) and Configuration Management (CM) data of each cell of the network, measuring short time cell load (and other measurement indicators) and describing network traffic in a traffic profile as a function of time per cell ; then applying the cell load, traffic profile and other performance measurement indicators (some dependent on configuration) to a rule based intelligent algorithm for candidate cell and schedule selection; and

- a second candidate cell list, based on comparing performance indicators, configuration and operational parameters of each cell of the first candidate cell list against respective thresholds ;
   - a power save scheduling module for
- adapting a power save schedule for each cell of the second candidate cell list, based on network and/or cell operational data
- grouping cells of the second candidate cell list into optimal batches or time schedules according to the adapted power save schedule, for the purpose of using in a powersave execution mechanism according to said recommended powersave profile
   - a power save execution evaluation mechanism for
- continuously monitoring Performance Management (PM) data in the area of each cell subjected to a power save execution mechanism according to the recommended power save profile, and the associated power save execution/activity performance
- determining the Quality Of Service network impact of each cell subjected to the power save execution mechanism
- monitoring a traffic level in each of a plurality of neighbouring cells for a cell subjected to a power save execution mechanism; and
- triggering a cell wake-up mechanism if rising network capacity requirements are detected (and not already part of the power save execution mechanism used)
   - a feedback module for
- submitting same PM KPI performance and Quality Of Service impact during powersave as input to the power save listing module
- provding post power save execution optimisation information as input to the power save listing module.

In one aspect the power save scheduling module is further adapted to determine a network traffic level and a cell KPI performance status of a cell after adapting its power save schedule and before subjecting the cell to the power save execution mechanism; and to remove the cell from the recommended powersave profile(s) prior to power save execution if the network traffic level and/or the KPI performance status fails to meet a predetermined minimum threshold.

Accordingly, in one aspect of the present invention, a method for reducing power consumption is provided in a cellular network comprising a plurality of cells, which comprises the steps of generating a first candidate cell list, based on collecting Performance Management (PM) and Configuration Management (CM) data of each cell of the network, measuring short time or term cell load and describing network traffic in a traffic profile as a function of time per cell, then applying the cell load, traffic profile and other performance measurement indicators (some possibly dependent on configuration) to a rule based intelligent algorithm for candidate cell and schedule selection ; generating a second candidate cell list, based on comparing performance indicators and operational parameters of each cell of the first candidate cell list against respective thresholds ; adapting a power save schedule for each cell of the second candidate cell list, based on network and/or cell operational data ; subjecting each cell of the second candidate cell list to a power save execution mechanism according to the adapted power save schedule ; continuously monitoring Performance Management (PM) data in the area of each cell subjected to the power save execution mechanism, and the associated power save execution/activity performance, and submitting same PM KPI performance during powersave and power save activity performance feedback as input to the steps of generating the first and second candidate cell lists.

Accordingly, the method evaluates data (e.g. such as traffic & alarm performance and configuration data) from all cells, in particular from their respective base stations, to select suitable power save candidate cells. Overly-complex and costly manual pre-analysis work for a "one-time" candidate list is no longer necessary, and optimal cell list and schedule selection, and thus power saving benefits, are achieved through self-learning based on automated control feedback.

A feature of this technique is the ability to calculate and maintain a traffic profile per cell from both current and historical analysis of traffic performance data of base station nodes. Profiled values represent typical values of a performance indicator (PI) (e.g. cell traffic), over specified time intervals. Profiled values for each periodical interval of a week, e.g. 15 minutes, are continuously calculated from the same intervals of the previous weeks.

These statistical traffic profiles, the short time cell or site traffic load, and further performance indicators can then be used as inputs to the candidate list generating steps. Such further performance indicators may variously, and non-exhaustively, include current cell (and/or site) traffic level or load (e.g. one or more of CS & PS Erlang, traffic volume, traffic channel % utilisation, number of users, number of access attempts from Idle state and/or URA, cell/site capacity utilisation, UUDL interference, various site/cell resource % utilisation e.g. DL power, channelization codes, HW, processor load, ASEs, number of compressed mode users, other); current cell (and/or site) traffic level in corresponding neighbour cells, overlay cells, inter- radio access technology (RAT) cells; expected/predicted cell traffic level (i.e. historical traffic profiles used to estimate expected traffic); expected/predicted cell traffic level in corresponding neighbour cells, overlay cells, inter-RAT cells; expected/predicted traffic in the next time interval; profile evaluation duration (e.g. 1 day, 1 week, 1 month,....) and granularity (e.g. 15m, 1 h, ...); power save evaluation feedback e.g. performance of power save activity (such as cell/site power saving and restoration execution success rate) with associated KPI impact of cell power save in neighbouring cells, overlay cells (e.g. CS/PS Accessibility & Call Completion Success Rate above a set limit, Call Retainability below a set limit , RF coverage and quality above minimum acceptable thresholds), and other RATs (e.g. no traffic shift unintentionally to other band or to GSM); base station alarm indication(s); cell site status and performance status prior to and/or during power save; traffic load thresholds (hysteresis and time-to-trigger); and Estimated/Measured power savings

Thus, in an embodiment of the method according to the invention, the Performance Management (PM) and Configuration Management (CM) data is preferably at least one selected from the group comprising current site and cell traffic level or load, predicted site and cell traffic level, current and predicted site/cell traffic level in corresponding neighbour cell(s), overlay cell, inter-RAT cell, site/cell power save activity performance i.e. power save and restore execution success rate (& whether base station alarm indications etc.), estimated/measured power savings (e.g. actual power save time X measured savings/hour (per configuration type)), potential Key Performance Indicator (KPI) impact of power save on adjacent or neighbour cells, overlay cells,, and other RATs (e.g. CS/PS Accessibility & Call Completion Success Rate above a set limit, Call Retainability below a set limit, RF coverage and quality thresholds, no traffic shift unintentionally to other band or say to GSM, etc.), overall site performance status prior to and during power save, aggregated historical PM data of second list candidate cell over a predetermined evaluation period, and power save schedule over a predetermined level of chronological granularity. In a variant of this embodiment, the Performance Management (PM) and Configuration Management (CM) data may be further selected from the group comprising network sectors that have additional Intra-RAT or overlay carriers and network sectors that have Inter-RAT coverage. In another variant of this embodiment, the Performance Management (PM) and Configuration Management (CM) data may be further selected from the group comprising terminal measurements input (using existing periodic measurement report mechanism) e.g. DL RSCP (coverage) & EcNo (quality), UE transmit power (UL coverage), UE triggered events (such as handover, compressed mode, UE max transmit power etc.) ; terminal capability support considerations e.g. do all redirected terminals from say Wcdma (or GSM) support the potential alternative LTE coverage? (idem to GSM/Wcdma from LTE) ; other site or sector level specific measurements e.g. sector transmit power, RBS various UL measured powers, RSSI (interference) etc.

A further feature of this technique is the ability to automatically factor other real-time operational, configuration and location based input criteria into the continuous cell and schedule selection process, such as network configuration information (e.g. overlay, intra- or inter- RAT, GSM, Long Term Evolution (LTE) or other RAT coverage availability; carrier strategy information (e.g. guaranteed continuous coverage carrier requirement on one RAT or one carrier; adapt as required to local operator RF & Traffic steering preferences for Idle Mode Cell Selection, Handover and Inter Frequency Load Sharing (speech vs data) strategy during normal operation etc.); site/cell configuration (e.g. #Radio Units (RUs); type RUs, RU configuration etc., type of baseband equipment, whether macro, micro, pico or femto site etc.). May favourably weight the "most energy saving gain" configurations as part of candidate selection criteria (based on known or pre-determined or self-learned "Preferred Powersave Configurations"); "sufficient" alternative capacity (also coverage & cell capability) exists to potentially handle/maintain any redirected traffic during power-save operation (e.g. capacity such as power, codes, RBS HW, other capacity resources etc.); quality of service requirements during powersave period (e.g. maintain multi-carrier requirements in certain areas); Optimized candidate selection i.e. candidate weighting or preference so as to favour powersave at full site level, where possible i.e. if there is sufficient alternative RAT coverage available in the area (to achieve maximum power saving in a given geographical area); boundary requirements close to Location Area (LA)/ Routing Area (RA)/ Tracking Area (TA) borders; requirement of alternative coverage; operational information (e.g. operator-defined candidate cell exclusion "blacklist" (e.g. for on-going/planned site activities, site specific investigations); pre-defined "not allowed" periods (applied to all candidates); pre-defined operator-allowed candidate cell "whitelist"; traffic steering preferences and options prior to and during cell power save (e.g. force migrate users from carrier f1 to f2, soft-lock cell, adapt necessary configuration parameters etc.); powersave RAT preference (e.g. if no overlay, what other suitable capability Radio Access Technologies (RATs) are available in the same coverage area, and Power save the most expensive energy-consuming RAT); operator-activated and -enabled features that may possibly interfere with power save activity or reciprocally (e.g. Neighbouring Cell Support); geographical (or location) based information (e.g. identify site intended for "large event" coverage; if site close to LA/RA/TA boundaries possibly consider signalling load impact during candidate cell selection, any location-specific continuous coverage or other traffic steering preferences?, avoid candidate selection on "priority" routes or locations?); emergency call support requirements (e.g. guaranteed coverage requirement for emergency calls, E911 caller-location requirements in North America etc.); site alarm indications (Cell site & performance status prior or during power save); terminal measurements input e.g. DL RSCP (coverage) & EcNo (quality), UE Tx power (UL coverage), UE triggered events (e.g. handover, compressed mode, max power etc.); terminal capability support considerations e.g. are all terminals supported in alternative LTE coverage?; and candidate cell proximity considerations, such as minimum distance considerations between two power save candidate cells e.g. do not power save both immediate proximity neighbours, unless certain conditions fulfilled (e.g. suitable neighbour relations defined to ensure no coverage "holes" during power save operation; inter-frequency handover is possible to an alternative available equal or higher capability RAT).

Thus, in an embodiment of the method according to the invention, the performance indicators and operational parameters are at least one selected from the group comprising alternative coverage options such as neighbour, overlay or other RAT, carrier strategy data for power save, site/cell configuration data (preferred powersave configurations), suitable alternative capacity options such as in neighbour, overlay, or other RAT, potential KPI impact of power save and subsequent power resume in the cell and neighbouring and/or overlaying cells or other RATs, estimated/measured power savings of power save execution, whether the cell is included in an operator-defined black list or white list, whether emergency call support is a requirement and not alternatively supported by other coverage capability, whether "not allowed" periods defined.

In an embodiment of the method according to the invention, the network and/or cell operational data is at least one selected from the group comprising specific locations at which coverage should be maintained for specific time periods, signalling load at LA/RA/TA boundaries, operator-defined "always-on" time periods, CV auto backups schedule, system upgrades schedule, network reconfiguration events, scheduled migrations from e.g. Asynchronous Transfer Mode (ATM) to Internet Protocol (IP) sites, site-specific investigation schedule, Neighbouring Cell Support (NCS) or other relevant OSS feature schedule. In a variant of this embodiment, the step of adapting a power save schedule for a cell may further comprise excluding the cell from the second list when the operational data for the cell is incompatible with the power save execution mechanism.

An embodiment of the method according to the invention may comprise the further steps of determining a network traffic level or load and a cell KPI performance status of a cell after adapting its power save schedule and before subjecting the cell to the power save execution mechanism, and aborting the subjecting of the cell to the power save execution mechanism if the network traffic level and/or the KPI performance status fails to meet a predetermined minimum threshold.

In an embodiment of the method according to the invention, the step of subjecting cells to the power save execution mechanism may further comprise grouping cells of the second candidate cell list in batches according to the adapted power save schedule.

An embodiment of the method according to the invention may comprise the further steps of monitoring a traffic level in each of a plurality of neighbouring cells for a cell subjected to the power save execution mechanism ; and triggering a cell wake-up mechanism if rising network capacity requirements are detected.

The success of the power save activities is continuously measured, as well as the associated KPI impact on any neighbour, overlay and/or Inter RAT cells. This information, together with its temporal and geographical context, is used as feedback into the method of selecting candidate cells. Traffic measurements and longer-term traffic and configuration profiles are continuously collected to support this self-learning technique. Other input variables may include required coverage times (even at no or low traffic) based on either specific operator, geographical or other information; country regulatory requirements for coverage; and candidate cell list determination frequency.

Thus, in an embodiment of the method according to the invention, the step of continuously monitoring may comprise the further step of determining at least KPI performance status in the surrounding area of a cell after subjecting the cell to the power save execution mechanism.

The method thus operates in a coordinated and correlated manner as a continuous data processing loop for selecting candidate cells in the first and second list with on-going energy optimization.

According to another aspect of the present invention, there is also provided a system for reducing power consumption in a cellular network, comprising a plurality of cells defining the cellular network ; a power save listing module for generating a first candidate cell list, based on collecting Performance Management (PM) and Configuration Management (CM) data of each cell of the network, measuring at least short time cell load (and other measurement indicators) and describing network traffic in a traffic profile as a function of time per cell, then applying the cell load, traffic profile and other performance measurement indicators (some dependent on configuration) to a rule based intelligent algorithm for candidate cell and schedule selection ; and a second candidate cell list, based on comparing performance indicators and operational parameters of each site or cell of the first candidate cell list against respective thresholds ; a power save scheduling module for adapting a power save schedule for each cell of the second candidate cell list, based on network and/or cell operational data; a power save execution mechanism to which each cell of the second candidate cell list is subjected according to the adapted power save schedule ; and a performance feedback module for continuously monitoring Performance Management (PM) data in the area of each cell subjected to the power save execution mechanism , and the associated power save execution/activity performance, and submitting same PM KPI performance during powersave and power save activity performance feedback as input to the power save listing module.

In an embodiment of the system according to the invention, the power save scheduling module may be further adapted to determine a network traffic level and a cell KPI performance status of a cell after adapting its power save schedule and before subjecting the cell to the power save execution mechanism; and to abort the subjecting of the cell to the power save execution mechanism if the network traffic level and/or the KPI performance status fails to meet a predetermined minimum threshold.

In an embodiment of the system according to the invention, the power save scheduling module may be further adapted to monitor a traffic level in each of a plurality of neighbouring cells for a cell subjected to the power save execution mechanism ; and to trigger a cell wake-up mechanism if rising network capacity requirements are detected.

According to a further aspect of the present invention, there is also provided a set of instructions recorded on a data carrying medium which, when read from the medium and processed by a data processing terminal or node operably connected with a plurality of cells defining a cellular network, configures the terminal or node to reduce power consumption in the cellular network, by generating a first candidate cell list, based on collecting Performance Management (PM) and Configuration Management (CM) data of each cell of the network, measuring at least short time cell load (and other measurement indicators) and describing network traffic in a traffic profile as a function of time per cell, then applying the cell load, traffic profile and other performance measurement indicators (some dependent on configuration) to a rule based intelligent algorithm for candidate cell and schedule selection ; generating a second candidate cell list, based on comparing key performance indicators , configuration and operational parameters of each cell of the first candidate cell list against respective thresholds ; adapting a power save schedule for each cell of the second candidate cell list, based on network and/or cell operational data ; subjecting each cell of the second candidate cell list to a power save execution mechanism according to the adapted power save schedule ; continuously monitoring Performance Management (PM) data in the area of each cell subjected to the power save execution mechanism, and the associated power save execution/activity performance, and submitting same PM KPI performance during powersave and power save activity performance feedback as input to the steps of generating the first and second candidate cell lists.

According to still another aspect of the present invention, there is also provided a cellular network comprising cells operably configured by a data processing terminal or node configured with the set of instructions substantially as described hereinabove.

Other aspects of the invention are as described herein.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 illustrates a typical cellular network environment in which the method and system of the invention may be embodied, including a network management terminal interfaced with a plurality of base stations and a plurality of mobile telephone handsets all connected to the cellular network;
Figure 2 is a logical diagram of a typical hardware architecture of any one of the mobile telephone handsets shown in Figure 1;
Figure 3 is a logical diagram of a typical hardware architecture of the network management terminal shown in Figure 1, including memory means;
Figure 4 provides a functional overview of a system according to the invention in the environment of Figure 1 embodied as a plurality of data processing modules at the network management terminal of Figure 3;
Figure 5 is a flowchart representation of the data processing logic at a power save listing module of Figure 4 for generating a first list of candidate cells;
Figure 6 is a flowchart representation of the data processing logic at the power save listing module of Figure 4 for generating a second list of candidate cells;
Figure 7 is a flowchart representation of the data processing logic at a power save scheduling module of Figure 4 for adapting power save schedules; and
Figure 8 is a functional representation of the data processing logic at a feedback module of Figure 4.

### Detailed Description of the Drawings

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

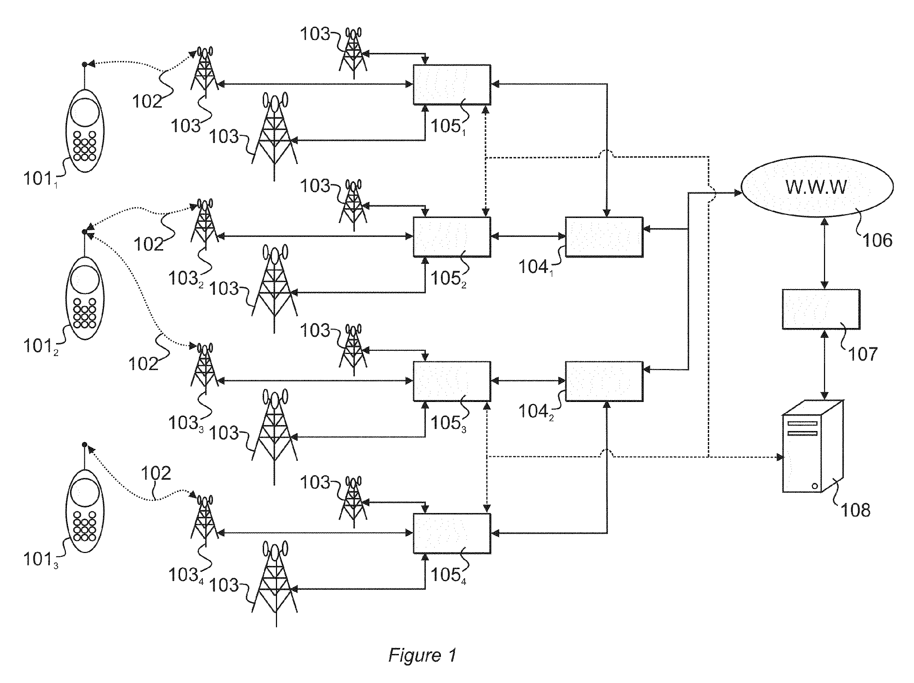

With reference to Figures 1 to 4 herein, an example embodiment of a system according to the invention is shown within a networked environment comprising a plurality of mobile telephone handsets 101 connected to a wireless communication network as described hereafter and at least one network management server 108 configured according to the invention for generating lists of cellular base stations 105 suitable for selective power saving execution, subjecting one or more of the listed cellular base stations to a power save mechanism and monitoring the efficiency of the power saving.

Each mobile telephone handset 101 has wireless telecommunication emitting and receiving functionality over a cellular telephone network configured according to the International Mobile Telecommunications-4000 ('IMT - 4000') network industry standards, thus including UMTS/CDMA-4000/EDGE or '3G', IEEE802.16e/LTE Advanced or '4G', and wherein telecommunication is performed as voice, alphanumeric or audio-video data using the Short Message Service ('SMS') protocol, the Wireless Application protocol ('WAP') the Hypertext Transfer Protocol ('HTTP') or the Secure Hypertext Transfer Protocol ('HTTPS'). The handset 101 is preferably that commonly referred to as a 'smartphone' and may for instance be an iPhone™ handset manufactured by the Apple Corporation or a Nexus One™ handset.

The mobile telephone handset 101 receives or emits voice, text, audio and/or image data encoded as a digital signal over a wireless data transmission 102 in the network, wherein the signal is relayed respectively to or from the handset by the geographically-closest communication link relay 103 of a plurality thereof. The plurality of communication link relays 103 allows digital signals to be routed between the handset 101, as it is geographically displaced in use, and its communication target(s) by means of a remote gateway 104 via a MSC or base station 105. The gateway 104 is for instance a communication network switch, which couples digital signal traffic between wireless telecommunication networks, such as the cellular network within which wireless data transmissions 102 take place, and another network 106 with a different protocol or topography, for instance a Wide Area Network ('WAN') such as the Internet 106. Accordingly, the gateway 104 further provides protocol conversion if required, for instance whether a handset 101 uses the WAP or HTTPS protocol to communicate data.

Alternatively, or additionally, the mobile telephone handset 101 may have wireless telecommunication emitting and receiving functionality over a wireless local area network ('WLAN') conforming to the 802.11 standard ('Wi-Fi'). In the WLAN, telecommunication is likewise performed as voice, alphanumeric and/or audio-video data using the Internet Protocol (IP), Voice data over IP ('VoIP') protocol, Hypertext Transfer Protocol ('HTTP') or Secure Hypertext Transfer Protocol ('HTTPS'), the signal being relayed respectively to or from the data processing device 101 by a wireless (WLAN) router 107 interfacing a suitably-authenticated nearby mobile data communication device 101 to the WAN communication network 106.

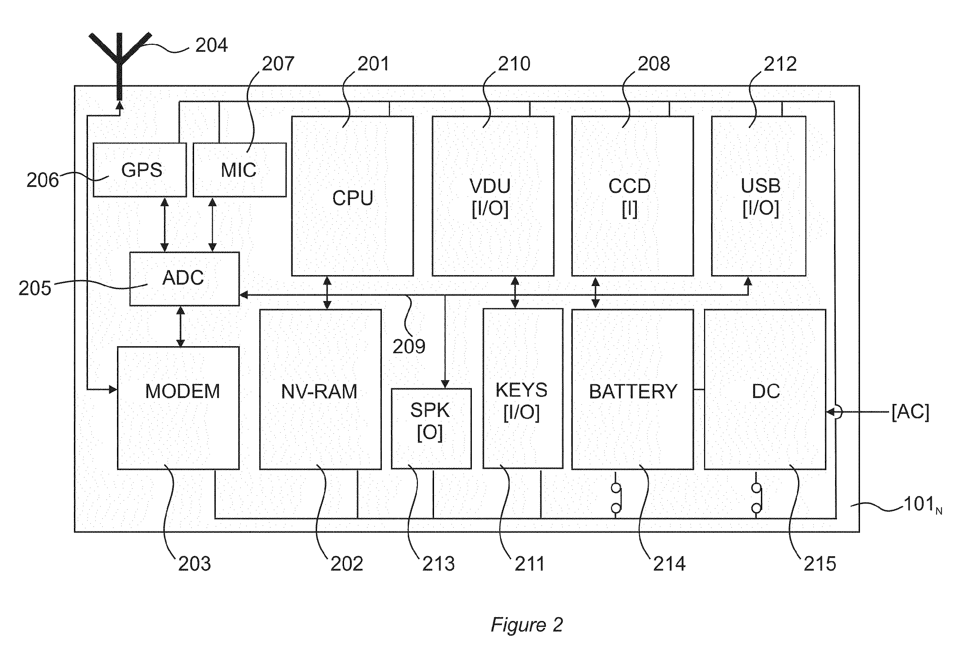

A typical hardware architecture of the mobile telephone handset 101 of the example is shown in Figure 2 in further detail, by way of non-limitative example. The handset 101 firstly includes a data processing unit 201, for instance a general-purpose microprocessor ('CPU'), acting as the main controller of the handset 101 and which is coupled with memory means 202, comprising non-volatile random-access memory ('NVRAM'), either permanently embedded within the terminal or in the form of a removable data storage medium such as an SD or mini-SD card, or both.

The mobile telephone handset 101 further includes a modem 203 to implement the wireless communication functionality, as the modem provides the hardware interface to external communication systems, such as the closest communication link relay 103 and ensuing cellular telephone network 104, 105 shown in Figure 1. An aerial 204 coupled with the modem 203 facilitates the reception of wireless signals from nearby communication link relays 103. The modem 203 is interfaced with, or includes, an analogue-to-digital converter ('ADC') 205 for demodulating wavelength wireless signals received via the antenna 204 into digital data, and reciprocally for outgoing data.

The handset 101 may further include self-locating means in the form of a GPS receiver 206, wherein the ADC 205 receives analogue positional and time data from orbiting satellites (not shown), which the data processing unit 201 or a dedicated data processing unit processes into digital positional and time data.

The handset 101 further includes a sound transducer 207, for converting ambient sound waves, such as the user's voice, into an analogue signal, which the ADC 205 receives for the data processing unit 201 or a dedicated data processing unit to process into digital audio data.

The handset 105 may further include imaging means 208 in the form of an electronic image sensor, for capturing image data which the data processing unit 201 or a dedicated data processing unit processes into digital image data.

The CPU 201, NVRAM 202, modem 203, GPS receiver 206, microphone 207 and digital camera 208 are connected by a data input/output bus 209, over which they communicate and to which further components of the handset 101 are similarly connected, in order to provide wireless communication functionality and receive user interrupts, inputs and configuration data.

Alphanumerical and/or image data processed by CPU 201 is output to a video display unit 210 ('VDU'), from which user interrupts may also be received if it is a touch screen display. Further user interrupts may also be received from a keypad 211 of the handset or from an external human interface device ('HiD') connected to the handset via a Universal Serial Bus ('USB') interface 212. The USB interface advantageously also allows the CPU 201 to read data from and/or write data to removable storage devices. Audio data processed by CPU 201 is output to a speaker unit 213. Power is provided to the handset 101 by an internal module battery 214, which an electrical converter 215 charges from a mains power supply as and when required.

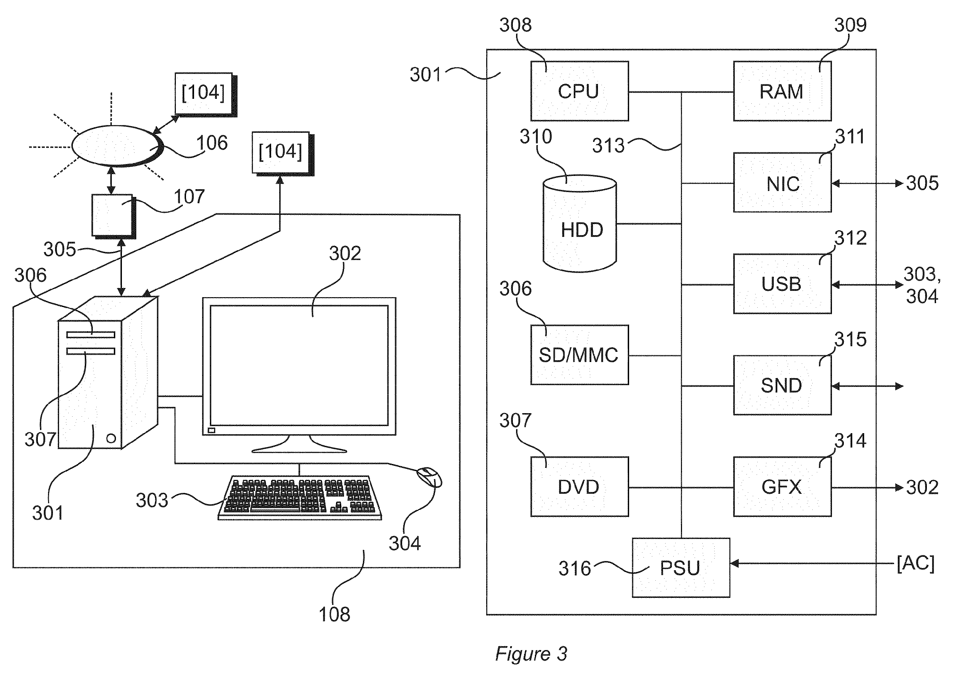

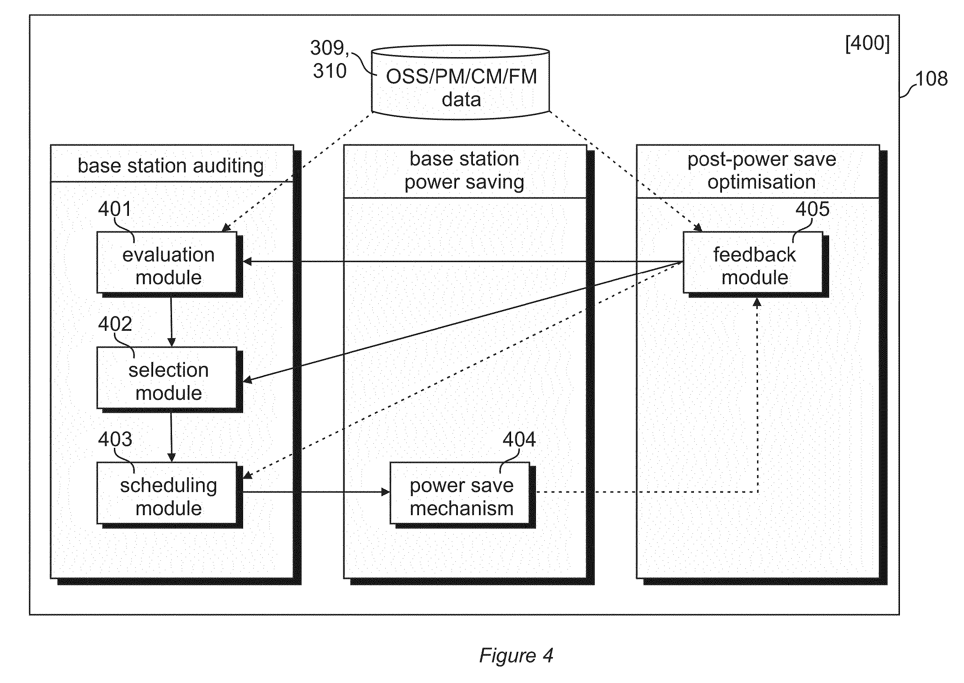

The networked environment next includes at least the first data processing terminal 108 configured as a network management server and which, for the power saving purposes of the present technique at least, communicates, stores and processes cellular data from the bases stations 105 via a plurality of data processing modules described in further detail hereafter with reference to Figures 4 to 8. Accordingly, the server 108 emits and receives data encoded as a digital signal over a wired data transmission conforming to the IEEE 802.3 ('Gigabit Ethernet') standard, wherein the signal may be relayed respectively to or from the base stations 105 directly, as shown in dotted lines in Figure 1, and/or via a wired router 107 interfacing the server 108 to the WAN communication network 106. Generally, the server 108 may be any portable or desktop data processing device having networking means apt to establish a data communication with the base stations 105 under its power-saving control. Accordingly, a typical hardware architecture of the data processing terminal 108 is now shown in Figure 3 in further detail, by way of non-limitative example.

The data processing device 108 is typically a computer configured with a data processing unit 301, data outputting means such as video display unit (VDU) 302, data inputting means such as HiD devices, commonly a keyboard 303 and a pointing device (mouse) 304, as well as the VDU 302 itself if it is a touch screen display, and data inputting/outputting means such as a wired or wireless network connection 305 to a data communication network, a magnetic data-carrying medium reader/writer 306 and an optical data-carrying medium reader/writer 307.

Within data processing unit 301, a central processing unit (CPU) 308 provides task co-ordination and data processing functionality. Sets of instructions and data for the CPU 308 are stored in memory means 309 and a hard disk storage unit 310 facilitates non-volatile storage of the instructions and the data. A network interface card (NIC) 311 provides the interface to the network connection 305. A universal serial bus (USB) input/output interface 312 facilitates connection to the keyboard and pointing devices 303, 304.

All of the above components are connected to a data input/output bus 313, to which the magnetic data-carrying medium reader/writer 306 and optical data-carrying medium reader/writer 307 are also connected. A video adapter 314 receives CPU instructions over the bus 313 for outputting processed video data to VDU 302. An audio adapter or soundcard 315 likewise receives CPU instructions over the bus 313 for outputting processed audio data to internal or external speakers (not shown).

All the components of data processing unit 301 are powered by a power supply unit 316, which receives electrical power from a local mains power source and transforms same according to component ratings and requirements.

With reference now to Figures 4 to 8 herein, the network management server 108 is configured according to the invention for generating lists of cellular base stations 105 suitable for selective power saving execution, subjecting one or more of the listed cellular base stations to a power save mechanism and monitoring the efficiency of the power saving. A functional overview of the system 400 processed at server 108 according to the invention in the environment of Figure 1 is shown in Figure 4, embodied as a plurality of data processing modules.

The system 400 firstly comprises a power save listing module consisting of an evaluation module 401 and a selection module 402. The power save listing module is adapted to generate a first candidate cell list with the evaluation module 401, based on collecting at least Performance Management (PM) and Configuration Management (CM) data of each cell 105_{N} of the network, measuring short time cell load and describing network traffic in a traffic profile as a function of time per cell , then applying the cell load, traffic profile and other performance measurement indicators (some dependent on configuration) to a rule based intelligent algorithm for candidate cell and schedule selection. The power save listing module is further adapted to generate a second candidate cell list with the selection module 402, based on comparing Key performance indicators (KPI), configuration and operational parameters of each cell of the first candidate cell list against respective thresholds.

The system 400 further comprises a power save scheduling module 403 for adapting a power save schedule for each cell of the second candidate cell list, based on network and/or cell operational data. The system 400 further comprises a power save execution mechanism 404 to which each cell of the second candidate cell list is subjected according to the adapted power save schedule. The system 400 finally comprises a feedback module 405 for continuously monitoring Performance Management (PM) data in the area of each cell subjected to the power save execution mechanism, as well as the associated power save execution/activity performance, and submitting same PM KPI performance during powersave and power save activity performance feedback as input to the evaluation module 401 and selection module 402 of the power save listing module.

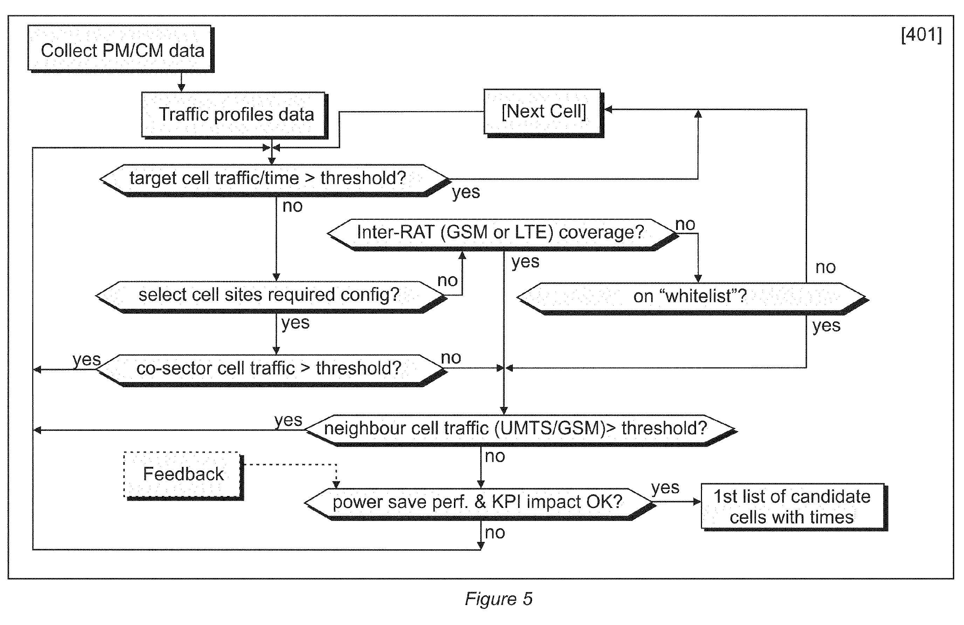

With reference now to Figure 5, a simplified representation of the data processing steps performed by the evaluation module 401 of the power save listing module for generating a first list of candidate cells is shown, wherein the suitability of potential candidate cells for power save execution is evaluated.

Performance Management (PM) and Configuration Management (CM) data is collected and analysed in order to measure short time or term cell load and to describe the traffic in a traffic profile as a function of time per cell. The traffic profiles, cell load, and other performance indicators (some dependent on configuration) are then applied by the rule based intelligent technique for candidate cell and schedule selection. Thus, by way of non-exhaustive example, the following PM and CM data may be collected and analysed:
- current site and cell "traffic level" criteria check per candidate cell/overlay/neighbour/inter-RAT cell ;
- expected/predicted site and cell "traffic level" criteria check per candidate cell/overlay/neighbour/inter-RAT cell ;
- feedback about site/cell power save activity performance, estimated/measured power savings, potential KPI impact of power save on neighbour/overlay cells and other RATs etc., and overall site performance status prior to and during power save are taken into account ;
- terminal measurements input, terminal capability support considerations, and other site or sector level specific measurements may be considered ;
- candidate cell chosen (based on real aggregated historical PM data over chosen evaluation period), assuming no site alarms ;
- suitable power save time schedules are recorded per candidate cell chosen (based on traffic load thresholds etc. applied to cell traffic profile, or other measurement indicators), wherein schedules may be different per week/weekend or even per day (or lower granularity if required).

For selected candidate cells based on actual and expected "low" traffic, by way of non-exhaustive example, the following further PM and CM data may be collected and analysed:
- Check for sectors that have additional Intra-RAT or overlay carriers (e.g. WRAN);
- Otherwise, check for Inter-RAT (e.g. GSM or LTE) coverage ;
- If no alternative coverage, check if cell is "operator-allowed" power save candidate from "whitelist"? For example, cells that cover places with shut down periods (e.g. shopping centres) may also be potential candidate cells for power save.

The first candidate cell list is thus output by the evaluation module 401 and, with reference to Figure 4, submitted as input to the selection module 402 of the power save listing module.

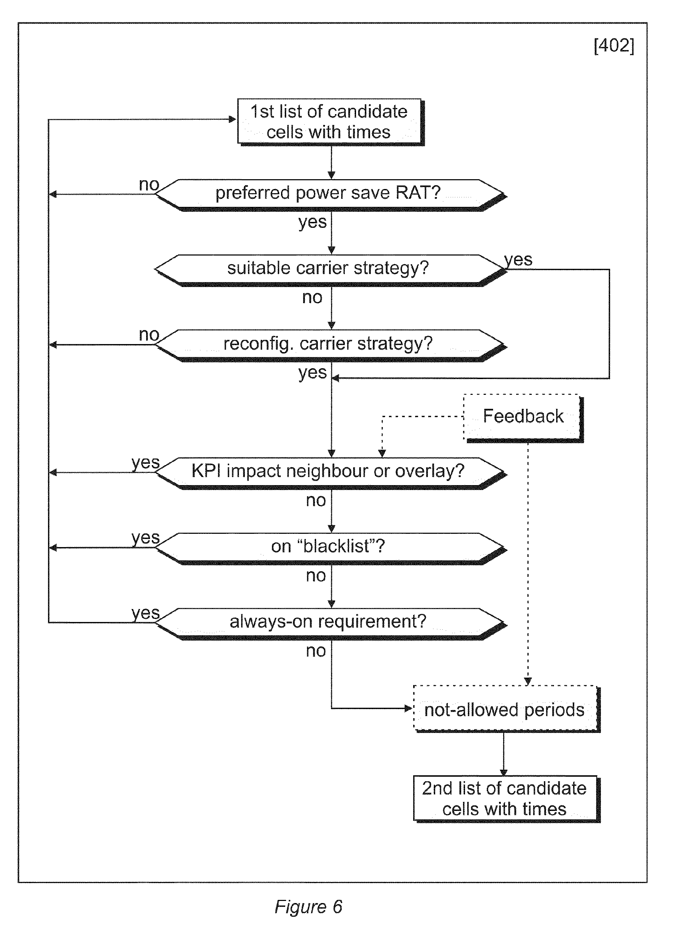

With reference now to Figure 6, a simplified representation of the data processing steps performed by the selection module 402 of the power save listing module for generating a second list of candidate cells is shown, wherein one or more cells are selected from the first candidate cell list and corresponding traffic profile per cell, based on performance indicators (PI) and other practical site and operational considerations (SC/OC). By way of non-exhaustive example, the following PI, SC and OC data and rules may be evaluated, per cell listed in the first list:
- if alternative coverage options are available (such as overlay or other RAT), is this cell in the preferred RAT or frequency layer to be power saved e.g. based on cost or other traffic steering considerations?
- check other network specific configuration information, for example
   - verify suitable carrier strategy information for allowing power save (such as local operator RF & traffic steering preferences for Idle Mode, Handover and Inter Frequency Load Sharing, and whether a guaranteed continuous coverage carrier requirement on one RAT or on specific carrier); Auto-reconfiguration of carrier strategy to better support energy savings mode is possible during Power Save if operator-allowed;
   - verify sufficient alternative capacity e.g. to handle redirected traffic
   - verify suitable alternative capability e.g. HS/Eul, R99 and/or other required capabilities are supported on the available alternative coverage carrier(s).;
   - verify powersave configuration preferences e.g. whether macro, micro, pico or femto site, RU type and configuration etc.
   - verify candidate cell "proximity" requirements e.g. minimum "distance" criteria between all or specified power save candidate cells, where distance may be based on location coordinates or other considerations such as coverage (RSCP), quality (EcNo), Round Trip Time (RTT) for example.
   - verify other location-specific requirements e.g. "priority" route, "large event" site, boundary requirements such as close to LA/RA/TA borders etc.
- potential KPI impacts in cell and neighbour/overlay cells of power save and of subsequent power resume (power save evaluation feedback) ;
- is this cell part of operator-defined "blacklist" e.g. due to on-going site activities or other operational reason? Either manually exclude potential candidate cells (i.e. add to Exclusion List) or modify power save time for the candidate ;
- check operator-defined "always-on" time period requirements ;
- is Emergency call support a requirement, and not alternatively supported by other coverage capability?
- terminal capability support considerations i.e. are certain UE terminals potentially not supported in the alternative coverage area during powersave?
- geographical consideration whether to exclude or modify power save schedule e.g. important for say "large event" or other coverage reasons at specific locations or on specific dates, and/or consider signalling load or other impacts at LA/RA/TA boundaries, at cell power lock ;
- modify power save schedule per candidate cell based on operator defined "not-allowed" periods (applies to all candidates)

The first candidate cell list is thus obtained and, with reference to Figure 4, submitted as input to the scheduling module 403 of the system.

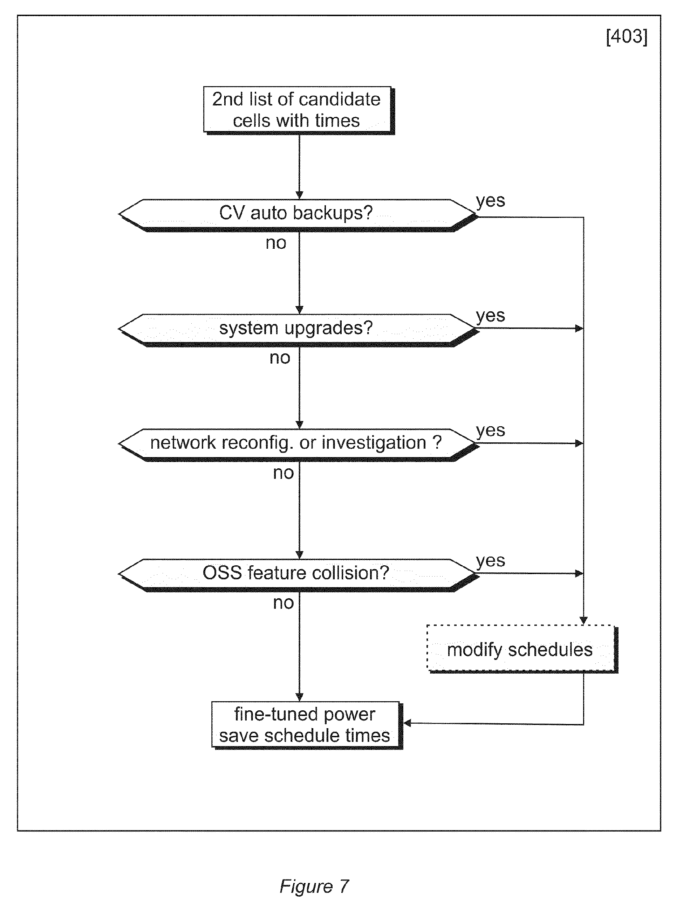

With reference now to Figure 7, a simplified representation of the data processing steps performed by the power save scheduling module 403 for adapting power save schedules is shown, wherein the Power Save schedule times proposed with the second list by the power save listing module 401, 402 may need to be further modified, or even one or more candidate cell(s) excluded from the second list, based on the following typical operational information:
- CV auto backups schedule
- System upgrades schedule
- Network reconfiguration (e.g. re-parenting/re-homing specific Radio Base Stations (RBSs), migrating ATM to IP sites) schedule
- Specific local site investigation schedule
- Relevant OSS feature(s) schedule, such as NCS (Neighbouring Cell Support)

It will be readily understood by the skilled reader that power save should not be executed at the same time as such site activities or features, because they may be expected to interfere with each other.

Upon completing any required scheduling modification at the power save scheduling module 403, the second candidate cell list and corresponding power save time schedules are then used as input to the power save execution mechanism 404. The actual power save execution mechanism is considered beyond the scope of the present disclosure.

However, during execution of the power save at the selected cells, the respective outcomes of at least the following decision points and rules are monitored by the feedback module 405, and used as continuous feedback into the candidate list selection process of modules 401, 402, 403:
- suitable low traffic levels as well as network or site or cell KPI performance status are again verified before and during execution e.g. if site problems exist prior to power save, then abort power save execution ;
- all cells on the same nodeB are not locked at the same time if previously selected in the candidate list. They are locked in separate batches, and depend on continuous KPI monitoring of the affected coverage area ;
- similarly, if a large number of cells are proposed for the same time schedule, these are also not power locked simultaneously, but may be locked in separate batches ;
- traffic levels in cell and neighbours are monitored in order to detect rising capacity needs, in order to trigger a wake-up mechanism if necessary in the power saved cells ;
- accidental power locking of all cells in an area and lost coverage is prevented by the power save function by auto-checking the status of overlaid cell(s) before and during power save execution ;
- built-in cell power-up verification and fault management (retry attempt and alarm) at cell unlock.

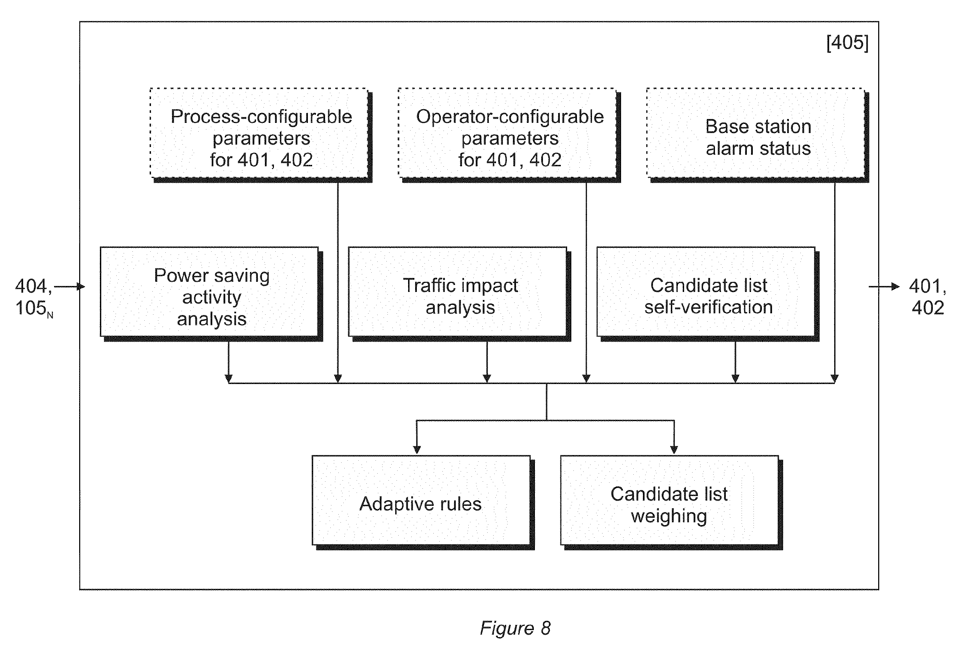

A functional overview of the feedback module 405 is shown in Figure 8, embodied as a plurality of data processing blocks, wherein PM data during power save periods is also continuously analysed to assess the success of the power save activity and the corresponding impact on traffic performance in cell and neighbour cells. This feedback is used as input to modules 401 and 402 to help decide if a chosen candidate may not be a suitable candidate in practice.

Candidate list self-verification functionality is another feature of the process and executes continuously to verify minimal KPI impact in advance of and during power save schedule activation. This sanity-check feedback mechanism also facilitates self-learning for better candidate list selection. It will be appreciated that machine learning capability can be employed.

Different KPI calculations in the technique consider power save impact differently e.g. power save active hours may be excluded from operator KPI evaluation and presentation, but included to properly quantify any negative KPI impact during power save execution (and for feedback and learning functionality). Power save active hours is also considered appropriately in maintaining traffic profiles used in the technique for power-save candidate list determination.

It will be readily understood by the skilled person that the above rules are described by way of example only and are not considered exhaustive. For instance, some further data and rules which may be considered include minimum level and duration (threshold & time-to-trigger) of "low traffic" criteria to be satisfied (in cell/overlay/neighbour), minimum "Guard Period" between subsequent power save activation periods for same cell/cluster/area, and if more than one frequency or RAT is a suitable candidate based on alternative coverage being available in the same coverage area, then make sure to select the "preferred power save RAT".

The candidate list determination technique disclosed herein is based on current power save execution mechanism implementations, where sufficient alternative coverage still exists in the location where power save is implemented. It does not consider more complex solutions where adjustments of power or electrical tilt from neighbour cells to provide alternative coverage are required. Nevertheless, the same approach may also be required for suitable candidate cell determination for such future solutions where candidate cell evaluation and power save execution are executing continuously in real time. The present technique is consistent with maintaining reliable service coverage and quality of service (QoS) in the affected area through a continuous feedback mechanism about the candidate cell decision making process (based on KPI performance assessment at power save) and the power save activity success rate.

Thus, the proposed technique is a unique method and process to automatically determine a RAN Power Save candidate cell list and corresponding scheduling criteria on a continuous basis, from multiple traffic performance, configuration and day-to-day operational data inputs. Current traffic measurements and traffic and configuration profiles are continuously collected to support this self-learning technique, with continuous power save performance evaluation feedback to help self-verify the candidate list selection technique. In addition, real-time operational, configuration and location based criteria that can vary often (e.g. daily or even more often) are also factored in to ensure this complex decision making is fully automated, and thus eliminate the need for any repetitive manual activities to determine suitable cells for power save. The latest optimal candidate cell list and corresponding time schedule for power save is thus always available.

The main benefits of the proposed new technique for power save candidate cell and schedule selection are to overcome existing power save solution limitations, namely:
- primarily based on both real time live traffic data and performance and historical traffic data, not on simulation models ;
- adapted by both network specific configuration and any operator-defined restrictions, as well as traffic and performance behaviour ;
- self-verifying i.e. continuous sanity-check mechanism in advance of and during power save to ensure candidate cell selection technique is accurate, does not include any "blacklist" sites, and prevents accidental power locking of wrong cell or if chosen cell has any "issues" prior to and during power save execution ;
- self-learning, e.g. with fine-tuned cell selection based on previous power save activations performance, and associated traffic performance impacts ;
- with dynamic power save mechanism activation, as optimal power save time(s) are implemented on a per cell basis (and thus power saving benefits are also more optimal) ;
- data is inherently collected and presented to indicate KPI performance during power save execution (and used as feedback for the intelligent candidate cell selection) ; and
- fully automated "audit service" task, such that intensive and costly manual pre-analysis work for a "one-time" candidate list by the operator is no longer necessary.

With the automated audit technique proposed herein, the latest optimal candidate cell list and corresponding time schedules (if required) for power save are thus always available. The cell selection technique facilitates a true automated end-to-end implementation of power save functionality, and is suitable for multi-technology RAN networks (GSM, UMTS, LTE etc.). The technique maintains reliable service coverage and quality of service (QoS) in the related power save area through accurate and adaptive candidate cell determination, while simultaneously consuming the lowest energy during power save periods.

Compared to prior art solutions, the proposed technique only determines the candidate cell list and corresponding schedule selection to be used for power save. The candidate list determination technique additionally uses network-specific configuration information, operator locally-defined restrictions and power save execution performance feedback, as input. Unlike earlier solutions, this technique automatically considers day to day operational information, local network configuration information, as well as expected traffic levels and KPI impact feedback.

The embodiments in the invention described with reference to the drawings generally comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A method for determining in a cellular mobile network a power consumption saving, said method comprising the steps of:
collecting Performance Management (PM) and Configuration Management (CM) data of at least one cell of the network;
describing network traffic in a traffic profile as a function of time per cell;
applying a rule based algorithm to the cell traffic profiles to generate an initial list of candidate cells and a schedule for each candidate cell where it is deemed suitable for power saving;
applying a set of filters to the initial list of candidate cells to exclude cells based on specific predefined criteria to generate a refined list of candidate cells and a schedule for each candidate cell;
generating a recommended powersave profile for use in a powersave execution mechanism, where the profile comprises of one or more schedules with each schedule associated with one or more cells; and
collecting Performance Management data and evaluating the impact of the powersave execution mechanism on the quality of service in the area of each cell subjected to the power save execution and using the impact to quality of service as an input into the generation of the initial and refined lists of candidate cells.

2. The method according to claim 1, wherein the steps of generating the initial and refined lists of candidate cells further comprises:
generating a first candidate cell list, based on collecting Performance Management (PM) and Configuration Management (CM) data of each cell of the network and measuring short time cell load;
describing network traffic in a traffic profile as a function of time per cell, then applying the cell load, traffic profile and other performance measurement indicators to the rule based intelligent algorithm for candidate cell and schedule selection; and
generating a second candidate cell list, based on comparing Key Performance Indicators (KPI), configuration and operational parameters of each cell of the first candidate cell list against respective thresholds.

3. The method according to claim 1 or 2, wherein the Performance Management (PM) and Configuration Management (CM) data is at least one selected from the group comprising current site/cell traffic level or load, predicted site/cell traffic level, current and predicted site/cell traffic level in corresponding neighbour, overlay and inter-RAT cell(s), site/cell power save activity performance, estimated/measured power savings, potential Key Performance Indicator (KPI) impact of power save on neighbour cells, overlay cells, and other RATs; overall site performance status prior to and during power save, aggregated historical PM data of second list candidate cell over a predetermined evaluation period, and power save schedule over a predetermined level of chronological granularity.

4. The method according to claim 3, wherein the Performance Management (PM) and Configuration Management (CM) data is further selected from the group comprising network sectors that have additional Intra-RAT or overlay carriers and network sectors that have Inter-RAT coverage, terminal measurements input, terminal capability support considerations, other site or sector level specific measurements.

5. The method according to any preceding claim wherein the performance measurement indicators and operational parameters are at least one selected from the group comprising alternative coverage options such as neighbour, overlay or other RAT; carrier strategy data for power save; site/cell configuration data (e.g. preferred powersave configurations); suitable alternative capacity options such as neighbour, overlay, or other RAT; potential KPI impact of power save and subsequent power resume in the cell and neighbouring and/or overlaying cells, or other RATs; estimated/measured power savings of power save execution; whether the cell is included in an operator-defined black list or white list; whether emergency call support is a requirement and not alternatively supported by other coverage capability; whether "always-on" or "not allowed" periods defined.

6. The method according to any preceding claim, wherein the step of generating a recommended powersave profile further comprises:
adapting a power save schedule for each cell of the second candidate cell list, based on network and/or cell operational data; and
grouping cells of the second candidate cell list into optimal batches or time schedules according to the adapted power save schedule, for the purpose of using in a powersave execution mechanism according to said recommended powersave profile.

7. The method according to any preceding claim wherein the network and/or cell operational data is at least one selected from the group comprising specific locations at which coverage should be maintained for specific time periods; signalling load at LA/RA/TA boundaries, operator-defined always-on time periods, CV auto backups schedule, system upgrades schedule, network reconfiguration events, scheduled migrations from e.g. Asynchronous Transfer Mode (ATM) to Internet Protocol (IP) sites, site-specific investigation schedule, Neighbouring Cell Support (NCS) or other OSS feature schedule.

8. The method according to claim 6, wherein the step of adapting a power save schedule for a cell further comprises excluding the cell from the second list when the operational data for the cell is incompatible with the power save execution mechanism.

9. The method according to any preceding claim comprising the further steps of determining a network traffic level or load and a cell KPI performance status of a cell after adapting its power save schedule and before subjecting the cell to the power save execution mechanism; and removing the cell from its recommended powersave profile(s) prior to power save execution if the network traffic level and/or the KPI performance status fails to meet a predetermined minimum threshold.

10. The method according to any preceding claim comprising the step of evaluating the impact of the powersave execution mechanism on the quality of service by:
continuously monitoring Performance Management (PM) data in the area of each cell subjected to the power save execution mechanism, as well as the associated power save execution/activity performance; and
submitting same PM KPI performance impact during powersave and power save activity performance feedback as input to the steps of generating the first and second candidate cell lists.

11. The method according to any preceding claim comprising the step of:
performing the above steps in an automated and continuous manner in order to implement a continuous closed loop system for machine learning capability in combination with said algorithm.

12. A system for determining in a cellular mobile network, a power consumption saving without impacting quality of service, said network having a plurality of cells, and said system comprising :
a power save listing module for generating:
a first candidate cell list, based on collecting Performance Management (PM) and Configuration Management (CM) data of each cell of the network, measuring a variable and describing network traffic in a traffic profile as a function of time per cell ; then applying the cell load, traffic profile and other performance measurement indicators to a rule based algorithm for candidate cell and schedule selection; and
a second candidate cell list, based on comparing performance indicators, configuration and operational parameters of each cell of the first candidate cell list against respective thresholds;
a power save scheduling module for
- adapting a power save schedule for each cell of the second candidate cell list, based on network and/or cell operational data;
- grouping cells of the second candidate cell list into optimal batches or time schedules according to the adapted power save schedule, for the purpose of using in a powersave execution mechanism according to said recommended powersave profile; and
a power save execution evaluation mechanism configured for
- continuously monitoring Performance Management (PM) data in the area of each cell subjected to a power save execution mechanism according to the recommended power save profile, and the associated power save execution/activity performance; and determining the Quality Of Service network impact of each cell subjected to the power save execution mechanism.
- monitoring a traffic level in each of a plurality of neighbouring cells for a cell subjected to a power save execution mechanism; and
- triggering a cell wake-up mechanism if rising network capacity requirements are detected (and not already part of the power save execution mechanism used)
• a feedback module for
- submitting same PM KPI performance and Quality Of Service impact during powersave as input to the power save listing module
- provding post power save execution optimisation information as input to the power save listing module.

13. The system according to claim 12, wherein the power save scheduling module is further adapted to determine a network traffic level and a cell KPI performance status of a cell after adapting its power save schedule and before subjecting the cell to the power save execution mechanism; and to remove the cell from the recommended powersave profile(s) prior to power save execution if the network traffic level and/or the KPI performance status fails to meet a predetermined minimum threshold; and optionally the power save execution evaluation mechanism is configured for monitoring a traffic level in each of a plurality of neighbouring cells for a cell subjected to a power save execution mechanism; and triggering a cell wake-up mechanism if rising network capacity requirements are detected.

14. A set of instructions recorded on a data carrying medium which, when read from the medium and processed by a data processing terminal operably connected with a plurality of cells defining a cellular network, configures the terminal to determine where and when in a cellular mobile network power consumption savings can be achieved without impacting quality of service, by collecting Performance Management (PM) and Configuration Management (CM) data of each cell of the network, describing network traffic in a traffic profile as a function of time per cell, applying a rule based algorithm to the cell traffic profiles to generate an initial list of candidate cells and a schedule for each candidate cell where it is deemed suitable for power saving; applying a set of filters to the initial list of candidate cells to exclude cells based on specific configuration, operational and performance criteria to generate a refined list of candidate cells and a schedule for each candidate cell ; generating a recommended powersave profile for use in a powersave execution mechanism, where the profile comprises of one or more schedules (i.e. continuous block of time), with each schedule containing one or more cells ; collecting Performance Management data and evaluating the impact of the powersave execution mechanism on the quality of service in the area of each cell subjected to the power save execution and using the impact to quality of service as input into the generation of the initial and refined lists of candidate cells, and performing the above steps in an automated and continuous manner thereby implementing a continuous closed loop system based on machine learning.

15. A cellular network comprising cells operably configured by a data processing terminal configured with the set of instructions according claim 14.
